# EUROPÄISCHE PATENTSCHRIFT

(11) **EP 1 049 882 B1**
(45) Veröffentlichungstag und Bekanntmachung des Hinweises auf die Patenterteilung: **11.06.2003**
(21) Anmeldenummer: 99907394.3
(22) Anmeldetag: 21.01.1999
(51) Int. Cl.: F16D 33/18

(54) **HYDRODYNAMISCHE KUPPLUNG**
HYDRODYNAMIC COUPLING
ACCOUPLEMENT HYDRODYNAMIQUE

(30) Priorität: 26.01.1998 DE 19802524
(43) Veröffentlichungstag der Anmeldung: 08.11.2000
(73) Patentinhaber: Voith Turbo GmbH & Co. KG, 89522 Heidenheim (DE)
(72) Erfinder: HOFFELD, Harald, D-74564 Crailsheim (DE); SCHÜTTLER, Günter, D-74599 Wallhausen-Michelbach (DE)
(74) Vertreter: Dr. Weitzel & Partner
(86) Internationale Anmeldenummer: EP9900373
(87) Internationale Veröffentlichungsnummer: WO99037934

(56) Entgegenhaltungen:
- EP-A- 0 427 589
- DE-A- 2 614 476
- DE-B- 1 600 974

## Beschreibung

Die Erfindung betrifft eine hydrodynamische Kupplung, im einzelnen mit den Merkmalen des Oberbegriffs des Anspruchs 1.

Hydrodynamische Kupplungen sind für eine Vielzahl von Anwendungsfällen in einer Vielzahl von Ausführungen bekannt. Ein Anwendungsfall einer hydrodynamischen Kupplung in einem Turbocompoundsystem ist in der Druckschrift DE 92 02 578.1 offenbart Diese Kupplung ist an den Schmierölkreislauf der Verbrennungskraftmaschine angeschlossen und nutzt dessen Öl als Arbeits- und als Kühlmittel. Aus dieser Druckschrift ist bekannt, daß bei Verwendung von Motorenöl als Arbeitsmittel in hydrodynamischen Kupplungen Komplikationen dadurch auftreten können, daß sich Verunreinigungen im Öl an der Innenseite der Umfangswand der Kupplung absetzen, was zu einer Verstopfung der Kupplung und zum Verlust ihrer Fähigkeit zum Ausgleich von Drehmoment und Drehzahlschwankungen führen kann. Da sich die gesamte Kupplung dreht, wirkt sie wie ein Fliehkraftölfilter. Pumpenschaufeln und Turbinenschaufeln der Kupplung werden mit hoher Formgenauigkeit und Oberflächengüte hergestellt, damit die zwischen dem Pumpen- und dem Turbinenrad umlaufende Strömung optimale Durchflußverhältnisse vorfindet und somit zu einem hohen Wirkungsgrad der Kupplung führt. Aufgrund der Gestaltung der Beschaufelung und der zwischen dem Turbinen- und Pumpenrad umlaufenden Strömung ist die Gefahr einer Feststoffablagerung an der Beschaufelung selbst im allgemeinen vernachlässigbar. Probleme bereitet jedoch der Zustand, wenn das als Betriebsmittel verwendete Motoröl die von den Schaufeln gebildete Arbeitskammer verläßt und sich somit nicht mehr in der kreisförmigen und spülenden Strömung zwischen den Schaufeln befindet sondern nur noch der durch die Rotation der Kupplung erzeugten Fliehkraft ausgesetzt ist. Verunreinigungen im Öl werden dann wegen ihres spezifisch höheren Gewichts gegen die Umfangswand der Kupplung geschleudert, wo eine Ablagerungsgefahr jedenfalls dann besteht, wenn die Innenseite der Umfangswand Unebenheiten in Form von Vorsprüngen, Vertiefungen oder Kanten oder eine ungenügende Oberflächengüte aufweist. Falls die Primärseite der Kupplung wegen Ablagerungen an der Sekundärseite hängenbleibt, ergibt sich dadurch eine starre Verbindung zwischen Primärund Sekundärseite, wodurch bei Drehschwingungen der Kurbelwelle des Verbrennungsmotors ein Schaden entweder an der Kupplung oder an den mit dieser zusammenwirkenden Antriebsteilen entstehen kann. Darüber hinaus können Feststoffablagerungen in der Kupplung auch die Strömung in dieser beeinträchtigen, was zu einem Anstieg der Betriebstemperatur und demzufolge zu einer Beschädigung der Kupplung führen kann. Ein weiteres wesentliches Problem ist die durch die Ablagerung erzeugte Unwucht, welche Biegeschwingungen bedingt. Falls die Primärseite der Kupplung wegen Ablagerungen die Sekundärseite berührt, ergibt sich dadurch eine zusätzliche Dremomentenübertragung. Zur Vermeidung dieses nachteiligen Effektes wird in dieser Druckschrift vorgeschlagen, daß bei hydrodynamischen Kupplungen, welche ein Pumpenrad sowie ein Turbinenrad umfassen, die je mit einer Welle verbunden sind und wobei die einzelnen Schaufelräder einander zugewandte, je einen halbtorusförmigen Ring bilden, einen Schaufelhalter aufweisen und somit eine torusförmige Arbeitskammer bilden, und wobei eines dieser Schaufelräder ein an seinem radial äußeren Rand befestigtes, sich radial nach innen erstreckendes und die Rückseite des anderen Rades umschließendes Gehäuse aufweist, die der Rückseite des anderen Rades zugewandte Innenseite des Gehäuses mit einer reibungsmindernden und/oder Feststoffablagerungen hemmenden Beschichtung zu versehen. Diese Beschichtung erzeugt eine sehr glatte Oberfläche, was jedoch die Möglichkeit der Ablagerungen lediglich minimiert, jedoch nicht beseitigt. Des weiteren bedeutet das Aufbringen einer Beschichtung ein erhöhten Aufwand und Beschädigungen in der Beschichtung vermindern den Erfolg und schaffen zusätzliche Ablagerungsflächen.

Eine gattungsgemäße Ausführung einer hydrodynamischen Kupplung ist aus der Druckschrift DE-B-1 600 974 bekannt. Das Gehäuse dieser Kupplung bildet mit dem Pumpenschaufelrad einen Zwischenraum. Im Pumpenschaufelrad ist dabei ein Verbindungskanal zwischen dem torusförmigen Arbeitsraum und dem Zwischenraum vorgesehen, wodurch neben dem Betriebsmittelkreislauf in der Arbeitskammer ein weiterer Betriebsmittelkreislauf, der Ablagerungen im Betriebsmittel nach außen spült, entsteht. Bei dieser Ausführung ist jedoch der Verbindungskanal radial ausgerichtet, so dass das hierüber abgeführte Betriebsmittel senkrecht auf die Gehäusewand auftrifft. Ablagerungen können somit daran haften bleiben und den Zwischenraum verstopfen, was wiederum Betriebsstörungen verursachen kann.

Der Erfindung liegt deshalb die Aufgabe zugrunde, eine hydrodynamische Kupplung für den Einsatz in Antriebssystemen, in welchen diese von einem Betriebsmedium durchströmt werden, derart weiterzuentwickeln, daß das Problem der Ablagerungen weitestgehendst ausgeschlossen wird. Die erfindungsgemäße Lösung soll sich dabei durch einen möglichst geringen konstruktiven und fertigungstechnischen Aufwand auszeichnen.

Die erfindungsgemäße Lösung ist durch die Merkmale des Anspruchs 1 charakterisiert. Vorteilhafte Ausgestaltungen sind in den Unteransprüchen beschrieben.

Die hydrodynamische Kupplung, welche ein Pumpen- und ein Turbinenschaufelrad umfaßt, die jeweils miteinander wenigstens einen torusförmigen Arbeitsraum bilden und mit einem Betriebsmittel befüllbar sind, weist ein vorzugsweise im Betrieb mit umlaufendes Gehäuse auf, welches das Pumpenrad wenigstens teilweise und das Turbinenrad ebenfalls wenigstens teilweise in axialer Richtung betrachtet umschließt und wenigstens mit dem Pumpenrad und dem Turbinenrad einen Zwischenraum bildet. Erfindungsgemäß ist vorgesehen, daß zur Verbindung von Arbeitsraum und Zwischenraum im Pumpenrad wenigstens eine Öffnung vorgesehen ist, welche einen Kanal durch das Pumpenrad bildet, der sich von der Innenfläche des beschaufelten Teiles des Pumpenrades zum Außenumfang des Pumpenrades erstreckt und derart ausgerichtet ist, daß sich die Lage mittels wenigstens einer Richtungskomponente beschreiben läßt, welche tangential an die Kontur des zwischen den beiden Schaufelrädern entstehenden Arbeits- bzw. Strömungskreislaufes im torusförmigen Arbeitsraum angelegt ist. Der Abstand zwischen Außenumfang des Pumpenrades und Gehäuse in radialer Richtung ist derart ausgelegt, daß sich im Zwischenraum ein Spülstrom ausbildet und das Betriebsmittel nicht aufgrund der Fliehkraft abgespritzt wird. D. h. es ist eine räumlich nahe Anordnung gegeben. Die konkrete Auslegung hängt jedoch von einer Reihe von Faktoren ab, u. a. auch von der Drehzahl des Pumpenrades.

Die erfindungsgmäße Lösung ermöglicht es, daß zusätzlich zum Strömungskreislauf im torusförmigen Arbeitsraum zum Zwecke der Kraftübertragung ein Nebenstrom an Betriebsmittel abgezweigt wird, welcher direkt in den Zwischenraum gelangt und eine Spülwirkung bezüglich der sich dort bzw. am Gehäuse angesammelten Ablagerungen ermöglicht.

Vorzugsweise ist der Verbindungskanal, d. h. die Öffnung am Pumpenrad, derart ausgeführt, daß diese tangential in Richtung der Kreislaufkontur, d. h. der sich im Arbeitsraum im Betriebszustand einstellenden Strömung und in Strömungsrichtung ausgerichtet ist. Dies ermöglicht es, den Nebenstrom mit dem geringst möglichen Widerständen und Strömungsgeschwindigkeitsverlusten zu erzeugen und somit eine optimale Spülwirkung zu erzielen.

Vorzugsweise sind eine Mehrzahl von Verbindungskanälen, d. h. von Öffnungen im Pumpenrad vorgesehen. Diese können entweder
1. auf einer gemeinsam gedachten theoretischen Umfangslinie oder aber
2. auf mehreren verschiedenen gedachten Umfangslinien
am Pumpenrad angeordnet sein. Unter Umfangslinien werden dabei theoretisch gedachte Linien am Außenumfang des Pumpenrades verstanden, welche parallel zur gedachten Mittelebene zwischen dem Pumpen- und Turbinenschaufelrad im eingebauten Zustand der Kupplung verlaufen. Es besteht dabei die Möglichkeit die Anordnung wechselweise auf unterschiedlichen Umfangslinien vorzunehmen.

Die Verbindungsleitungen bzw. Öffnungen am Pumpenschaufelrad können des weiteren auf einer Umfangslinie oder mehreren Umfangslinien in
1. konstanten Abständen oder
2. unterschiedlichen Abständen zwischen zwei einander benachbarten Öffnungen
angeordnet werden.

Die Auswahl der Anzahl sowie die Anordnung auf den unterschiedlichen Umfangslinien liegt im Ermessen des Fachmannes.

Für die Gestaltung des Querschnittes der Verbindungskanäle bzw. Öffnungen sind eine Vielzahl von Möglichkeiten denkbar. Beispielsweise können diese einen kreisrunden Querschnitt aufweisen, ovale Ausführungen oder Ausführungen mit Querschnitten in Form von Langlöchem sind ebenfalls denkbar.

Die Ausgestaltung des Verbindungskanales vom torusförmigen Arbeitsraum zum Außenumfang des Pumpenschaufelrades kann vielgestaltig erfolgen. Vorzugsweise ist eine direkt gerichtete, insbesondere tangential zur Kreislaufkontur im Arbeitsraum ausgerichtete Gestaltung, vorgesehen. Es besteht jedoch auch die theoretische Möglichkeit, geringfügige Änderungen eines derartigen Verlaufes vorzunehmen. Vermieden wird jedoch, was zu erheblichen Störungen des Nebenstromes und damit zur Beeinträchtigung seiner Funktion führt. Geringfügige Abweichungen von einem geradlinigen Verlauf im Verbindungskanal sind jedoch denkbar.

Des weiteren kann der Verbindungskanal zwischen dem torusförmigen Arbeitsraum und dem Außenumfang des Pumpenrades mit
1. konstantem Querschnitt
2. mit unterschiedlichen Querschnitten
ausgeführt sein. Querschnittsveränderungen zur Beeinflussung des Nebenstromes werden vorzugsweise allmählich zur Erhöhung der Strömungsgeschwindigkeit vorgenommen.

Die einzelnen Möglichkeiten bezüglich der querschnittsmäßigen Ausgestaltungen der Verbindungskanäle bzw. Öffnungen, deren Anordnung auf einer oder aber einer Mehrzahl von unterschiedlichen Umfangslinien am Pumpenrad und/oder der Ausgestaltung des Verlaufes des Verbindungskanales bzw. der Öffnung am Pumpenrad vom torusförmigen Arbeitsraum bis zum Außenumfang des Pumpenrades können beliebig miteinander entsprechend der zu erzielenden Wirkung kombiniert werden. Die konkrete Auswahl erfolgt dabei vorzugsweise entsprechend den Gegebenheiten des Einsatzfalles, insbesondere des verwendeten Betriebsmittels.

Die erfindungsgemäße Lösung kann für eine Vielzahl von hydrodynamischen Kupplungen mit unterschiedlichem Verwendungszweck zum Einsatz gelangen. Denkbar sind Ausführungen, bei denen das Gehäuse der hydrodynamischen Kupplung entweder wenigstens mittelbar drehfest mit dem Primärschaufelrad, d. h. dem Pumpenschaufelrad oder aber dem Sekundärschaufelrad, d. h. dem Turbinenschaufelrad, gekoppelt ist, d. h. das Gehäuse läuft im Betriebszustand, d. h. bei hydrodynamischer Kopplung des Pumpenrades mit dem Turbinenrad, mit um. Dieser Anwendungsfall stellt dabei einen bevorzugten Anwendungsfall dar, da bei dieser Anordnung eine Berührung eines der beiden Schaufelräder mit einer Ablagerung am Gehäuse am ehesten zu Beschädigungen führt und des weiteren auch das Entstehen einer Unwucht vermieden wird.

Eine bevorzugte Verwendung der erfindungsgemäßen Lösung erfolgt in einem Turbocompoundsystem, bei welchem das Betriebsmedium der hydrodynamischen Kupplung vom Betriebsmittel bzw. Öl der Verbrennungskraftmaschine gebildet wird. Gerade bei diesen Systemen ergeben sich oft Probleme aufgrund der Ablagerungen, die aufgrund der schnelldrehenden Maschinenteile, welche mit dem Betriebsmedium durchströmt werden, sich aus den auszentrifugierten Schwebstoffen ergeben.

Die erfindungsgemäße Lösung der Erzeugung eines Arbeitskreislaufes zwischen Pumpen- und Turbinenschaufelrad mit einem Nebenstrom, welcher zur Bespülung des Zwischenraumes zwischen den Schaufelrädern und dem Gehäuse verwendet wird, ermöglicht eine fertigungstechnisch einfache und kostengünstige Lösung der Problematik der Beseitigung der Ablagerungen im Zwischenraum zwischen Gehäuse und den Außenumfangsflächen der einzelnen Schaufelräder.

Die erfindungsgemäße Lösung wird nachfolgend anhand von Figuren erläutert. In diesen ist folgendes dargestellt
- Fig. 1: verdeutlicht anhand eines Ausführungsbeispiels in einem Turbocompoundsystem die erfindungsgemäße Ausführung und Betriebsweise der hydrodynamischen Kupplung;
- Fig. 2a: verdeutlicht mögliche Querschnitte des Verbindungskanales zwischen Arbeitsraum und Außenumfang des Pumpenschaufelrades;
- Fig. 2b: verdeutlicht ein Ausführungsbeispiel für einen Verlauf des Verbindungskanales zwischen dem torusförmigen Arbeitsraum und dem Außenumfang des Pumpenschaufelrades mit unterschiedlichem Querschnitt über die Länge des Verbindungskanales.

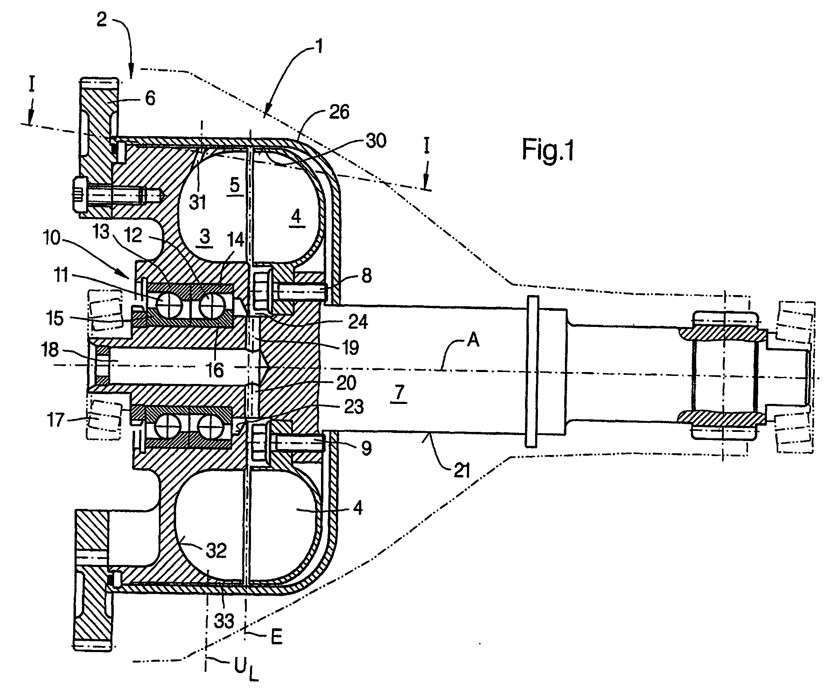

Die Fig. 1 verdeutlicht anhand eines Ausführungsbeispiels in Form einer hydrodynamischen Kupplung 1 in einem Turbocompoundsystem 2 die erfindungsgemäße Lösung. Die hydrodynamische Kupplung 1 umfaßt ein Primärrad 3, welches auch als Pumpenrad bezeichnet wird und ein Sekundärrad 4, welches als Turbinenrad bezeichnet ist. Pumpen- und Turbinenrad 3 bzw. 4 bilden miteinander wenigstens einen torusförmigen Arbeitsraum 5, welcher mit einem Betriebsfluid, beispielsweise mit Öl, befüllbar ist. Das Pumpenrad 3 wird von einem, auf einer hier nicht dargestellten Welle, einer hier nicht dargestellten Antriebsturbine, angeordneten Zahnrad angetrieben. Zu diesem Zweck kämmt das Zahnrad mit einem drehfest mit dem Pumpenrad 3 gekoppelten Zahnrad 6.

Das Turbinenrad 4 ist auf einer Abtriebswelle 7 der hydrodynamischen Kupplung 1 angeordnet. Im dargestellten Ausführungsbeispiel ist das Turbinenrad 4 mit der Abtriebswelle 7 drehfest mittels kraft- bzw. formschlüssiger Verbindungen in Form von Schraubverbindungen, hier stellvertretend die Schraubverbindungen 8 und 9, gekoppelt.

Das Pumpenrad 3 ist über eine Lageranordnung 10, welche vorzugsweise zwei Kugellager 11 und 12 umfaßt, wenigstens mittelbar auf der Abtriebswelle 7 gelagert. Die Kugellager der Lageranordnung 10 sind als Schrägkugellager ausgeführt. Diese ermöglichen es, kombinierte Belastungen, d. h. Radial- und Axialkräfte besser als Rillenkugellager aufzunehmen. Das Pumpenrad 3 stützt sich über die Außenringe 13 bzw. 14 der Schrägkugellager 11 bzw. 12 und der Innenringe 15 bzw. 16 direkt auf der Abtriebswelle 7 ab. Zur Realisierung der Drehmomentenaufnahme am Pumpenrad und Weitergabe über das Betriebsmittel an das Turbinenrad 4 erfolgen die Rotation von Pumpenrad 3 und den Außenringen 13 bzw. 14 der Schrägkugellager 11 bzw. 12 mit gleicher Drehzahl. Zwischen den Außenringen 13 bzw. 14 sowie dem Pumpenrad 3 sind zu diesem Zweck Preßsitze vorgesehen. Analoges gilt für die Abstützung des Zahnrades 6 über eine weitere Lageranordnung 17 auf der Abtriebswelle 7.

Die Ölversorgung des Arbeitsraumes 5 erfolgt im dargestellten Fall direkt über die Abtriebswelle 7. Zu diesem Zweck weist die Abtriebswelle 7 eine Bohrung 18 auf, die vorzugsweise koaxial zur Symmetrieachse A der Abtriebswelle 7 angeordnet ist. Diese Bohrung erstreckt sich von der Primärseite bis in etwa zur durch die Mittelsenkrechte durch den torusförmigen Arbeitsraum gelegten Ebene E. Von dieser Zentralbohrung 18 gehen weitere Verteilbohrungen 19 bzw. 20 ab, welche sich von der Zentralbohrung 18 bis an den Außenumfang 21 der Abtriebswelle 7 in radialer Richtung erstrecken. Über die Zentralbohrung 18 und die Verteilbohrungen 19 und 20 wird das Betriebsfluid in den torusförmigen Arbeitsraum 5 geleitet. Gleichzeitig erfolgt eine Abzweigung eines Betriebsmittelteilstromes für die Lageranordnung 10. Zu diesem Zweck ist zwischen dem Pumpenrad 3 und dem Turbinenrad 4 eine Scheibe 22 angeordnet, welche eine abgeschrägte Innenkontur 23 aufweist, die als Abschälkante für das Betriebsmittel fungiert. Die abgeschrägte Innenkontur 23 verläuft dabei von einem Zufuhrraum 24 zu den Außenringen 13 bzw. 14 der Schrägkugellager 11 bzw. 12 der Lageranordnung 10 hin. Die beiden Schrägkugellager 11 bzw. 12 werden dabei vollständig geflutet. Entsprechend der Auslegung der Scheibe 22 kann auf die Größe des abgezweigten Betriebsmittelteilstromes Einfluß genommen werden. Es ist somit nur eine zentrale Betriebsmittelzufuhr und damit auch eine Schmiermittelzufuhr erforderlich. Bei entsprechender Ausgestaltung besteht hier auch die Möglichkeit, zusätzlich das Lager 17, welches der Abstützung des Zahnrades 6 an der Abtriebswelle 7 dient, mit Schmiermittel zu versorgen.

Die hydrodynamische Kupplung 1 wird von einem glockenförmigen Gehäuse 26 umschlossen. Dieses vorzugsweise als Tiefziehteil ausgeführt und mittels verschiedener Verbindungsmöglichkeiten vorzugsweise wenigstens mittelbar mit dem Zahnrad befestigt. Es besteht jedoch auch die theoretische, jedoch hier nicht im einzelnen dargestellte Möglichkeit, das Gehäuse entweder drehfest mit dem Pumpenrad 3 oder dem Turbinenrad 4 zu koppeln, wobei jedoch immer zwischen dem Pumpenrad 3 und dem Gehäuse 26 ein Zwischenraum 27 gebildet wird. Aufgrund der Kopplung zwischen Gehäuse 26 und Zahnrad 6 läuft ersteres im Betrieb der Kupplung bzw. beim Antrieb des Pumpenrades 3 mit um.

Während des Betriebes der Kupplung gelangt Betriebsmittel aus dem torusförmigen Arbeitsraum 5 in die Zwischenräume 27. Das Betriebsmittel ist damit nicht mehr der kreisförmigen und spülenden Strömung zwischen der Beschaufelung der beiden Schaufelräder, Pumpenrad und Turbinenrad, ausgesetzt sondern dann nur noch der durch die Rotation der Kupplung erzeugten Fliehkraft. Verunreinigungen im Betriebsmittel werden dann aufgrund ihres spezifisch höheren Gewichtes gegen die Innenwand 30 des Gehäuses 26 geschleudert, wo eine Ablagerungsgefahr zumindest immer dann besteht, wenn an dieser Innenseite 30 Unebenheiten in Form von Vorsprüngen, Vertiefungen oder Kanten vorgesehen sind bzw. diese eine ungenügende Oberflächengüte aufweist. Dies kann zum Berühren des Sekundärrades 4 mit dem Gehäuse 26 führen, wodurch sich eine starre Kopplung zwischen Primär- und Sekundärseite ergeben kann. Des weiteren können örtliche Ablagerungen an umlaufenden Gehäusen die Ausbildung von Unwuchten bedingen, welche in Biegeschwingungen resultieren. Zur Lösung dieses Problemes sind im Pumpenrad 3 Öffnungen 31, beispielsweise in Form eines Verbindungskanales zwischen Schaufelgrund und Außenumfang des Schaufelrades, der derart ausgerichtet ist, daß dessen Lage sich wenigstens mit einer Richtungskomponente in Strömungsrichtung im Betriebszustand zwischen Pumpen- und Turbinenrad sowie im wesentlichen tangential zur Kontur des sich zwischen Pumpen- und Turbinenschaufelrad einstellenden Strömungsverlaufes beschreiben läßt, vorgesehen, welche die Bildung eines Nebenstromes vom Arbeitsraum 5 zum Zwischenraum 27 ermöglichen. Die Öffnungen 31 erstrecken sich dabei vorzugsweise von der Innenfläche des beschaufelten Teiles, insbesondere vom Schaufelgrund 32 zum Außenumfang 33 des Pumpenrades 3. Die Öffnungen 31 sind dabei derart ausgerichtet, daß wenigstens eine Richtungskomponente zur Beschreibung der Lage vorhanden ist, die im wesentlichen tangential zur Kontur des Betriebsmittelkreislaufes im torusförmigen Arbeitsraum 5 im Betriebszustand betrachtet ausgerichtet ist. Die Richtung der tangentialen Komponente, welche zur Beschreibung der Ausrichtung der Öffnung 31 herangezogen werden kann, ist dabei immer in Richtung der Strömung im Kreislauf im torusförmigen Arbeitsraum 5 ausgerichtet.

Vorzugsweise sind eine Vielzahl von Öffnungen in Umfangsrichtung der hydrodynamischen Kupplung, insbesondere des Pumpenrades 3, vorgesehen, wobei diese vorzugsweise in gleicher Höhe und auf einer theoretisch gedachten Umfangslinie U_{L} am Umfang 33 des Pumpenrades 3 angeordnet sind. Die Abstände zwischen den einzelnen Öfffnungen 31 sind vorzugsweise konstant gewählt.

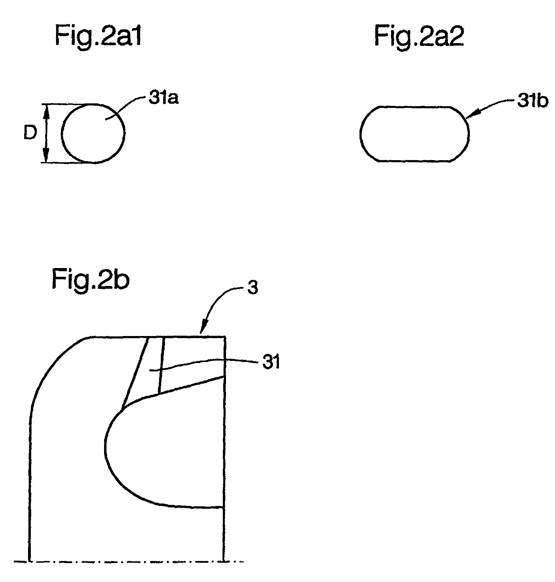

Die Öffnung 31 weist im dargestellten Fall vom Schaufelgrund bis zum Außenumfang 33 des Pumpenrades 3 einen konstanten Querschnitt auf und ist in Form einer Durchgangsbohrung ausgeführt. Jeder andere mögliche Querschnitt ist ebenfalls denkbar. Des weiteren besteht die hier im einzelnen nicht dargestellte Möglichkeit, die Öffnung 31 über ihre Erstreckung von der Schaufelradinnenfläche 31 des Pumpenrades 3 bis zum Außenumfang des Pumpenrades 3 mit unterschiedlichen Querschnitten zur Beeinflussung des darüber fließenden Nebenstromes zu versehen. Beispiele für die unterschiedlichen Querschnitte sind in der Fig. 2a und Beispiele für mögliche Querschnittsänderungen in der Fig. 2b wiedergegeben.

Die Fig. 2a verdeutlicht mögliche Querschnitte der Öffnungen 31. Die entsprechend der Fig. 2a 1 vorgesehene Variante in Form von Durchgangsbohrungen mit kreisrunden Querschnitt 31a mit einem Durchmesser D stellt eine bevorzugte und in der Herstellung am einfachsten zu realisierende Variante dar. Denkbar ist jedoch auch eine Ausführung entsprechend der Fig. 2a 2 in Form eines Langloches 31b. Die dargestellten Querschnitte sind dabei Querschnitte, wie sie sich ergeben, wenn der Schnitt entsprechend I-I in Fig. 1 erfolgt, d. h. in einer Ebene erfolgt, welche jeweils durch die äußeren Begrenzungen der Öffnungen bestimmbar ist sowie senkrecht zur Verlaufsrichtung der Öffnung verläuft.

Die Fig. 2b verdeutlicht eine Ausführung mit sich stetig zum Außenumfang 33 des Pumpenrades 3 verengendem Querschnitt hin.

Die Ausführungen entsprechend den Fig. 1 und 2 stellen lediglich Beispiele der erfindungsgemäßen Lösung dar. Die konkrete Auslegung bzw. Anordnung erfolgt entsprechend den Erfordernissen des Einzelfalls und liegt im Ermessen des Fachmannes.

## Patentansprüche

1. Hydrodynamische Kupplung (1);
1.1 mit einem Pumpenschaufelrad (3) und einem Turbinenschaufelrad (4), welche miteinander wenigstens einen, mit Betriebsmittel befüllbaren torusförmigen Arbeitsraum 5) bilden;
1.2 mit einem, das Pumpenschaufelrad (3) wenigstens in axialer Richtung teilweise umschließenden Gehäuse (26);
1.3 das Gehäuse (26) bildet mit dem Pumpenschaufelrad (3) wenigstens einen Zwischenraum (27);
**gekennzeichnet durch** die folgenden Merkmale:
1.4 mit wenigstens einem im Pumpenschaufelrad (3) vorgesehenen Verbindungskanal (31) zwischen dem torusförmigen Arbeitsraum (5) und dem Zwischenraum (27);
1.5 der Verbindungskanal (31) ist zur Realisierung eines Nebenstromes zur Bespülung des Zwischenraumes in Strömungsrichtung im Betriebszustand der hydrodynamischen Kupplung (1) zwischen dem Pumpen- und dem Turbinenschaufelrad (3, 4) tangential zu der sich im Betriebszustand einstellenden Kreislaufkontur des Strömungskreislaufes zwischen dem Pumpenschaufelrad (3) und dem Turbinenschaufelrad (4) ausgerichtet.

2. Hydrodynamische Kupplung nach Anspruch 1, **dadurch gekennzeichnet, daß** das Gehäuse (26) im Betriebszustand der Kupplung (1) umläuft.

3. Hydrodynamische Kupplung nach Anspruch 2, **dadurch gekennzeichnet, daß** das Gehäuse (26) wenigstens mittelbar mit dem Pumpenrad (3) gekoppelt ist

4. Hydrodynamische Kupplung nach Anspruch 2, **dadurch gekennzeichnet, daß** das Gehäuse (26) wenigstens mittelbar mit dem Turbinenschaufelrad (4) gekoppelt ist.

5. Hydrodynamische Kupplung nach einem der Ansprüche 1 bis 4,
**dadurch gekennzeichnet, daß** der Verbindungskanal zwischen torusförmigen Arbeitsraum (5) und Zwischenraum (27) tangential in Richtung zur Kreislaufkontur des sich zwischen Pumpenschaufelrad (3) und Turbinenschaufelrad (4) im Betriebszustand einstellenden Strömungskreislaufes ausgerichtet ist.

6. Hydrodynamische Kupplung nach einem der Ansprüche 1 bis 5, **dadurch gekennzeichnet, daß** der Verbindungskanal (31) einen geradlinigen Verlauf frei von Richtungsänderungen aufweist.

7. Hydrodynamische Kupplung nach einem der Ansprüche 1 bis 6, **dadurch gekennzeichnet, daß** eine Vielzahl von Verbindungskanälen (31) vorgesehen ist

8. Hydrodynamische Kupplung nach Anspruch 7, **dadurch gekennzeichnet, daß** die Verbindungskanäle (31) auf einer theoretische gedachten Umfangslinie (UL) des Pumpenschaufelrades (3), welche parallel zu einer Mittelebene, welche zwischen dem Pumpen (3) - und dem Turbinenschaufelrad (4) im Einbauzustand gebildet wird, angeordnet sind.

9. Hydrodynamische Kupplung nach Anspruch 7, **dadurch gekennzeichnet, daß** die Verbindungskanäle (31) auf mehreren theoretisch gedachten Umfangslinien des Pumpenschaufelrades (3), welche parallel zur Mittelebene zwischen dem Pumpenschaufelrad (3) und dem Turbinenschaufelrad (4) im Einbauzustand verlaufen, angeordnet sind.

10. Hydrodynamische Kupplung nach einem der Ansprüche 7 bis 9, **dadurch gekennzeichnet, daß** der Abstand zwischen zwei einander benachbarten Verbindungskanälen (31) konstant ist.

11. Hydrodynamische Kupplung nach einem der Ansprüche 1 bis 10, **dadurch gekennzeichnet, daß** der Querschnitt des Verbindungskanales (31) über seine Erstreckung vom Innenumfang (32) des Pumpenrades (3) bis zum Außenumfang (33) konstant ausgeführt ist.

12. Hydrodynamische Kupplung nach einem der Ansprüche 1 bis 10, **dadurch gekennzeichnet, daß** der Verbindungskanal (31) wenigstens eine Querschnittsänderung über seine Erstreckung vom Innenumfang (32) des Pumpenrades (3) bis zum Außenumfang (33) aufweist.

13. Hydrodynamische Kupplung nach Anspruch 12, **dadurch gekennzeichnet, daß** der Verbindungskanal (31) in Richtung des Außenumfanges (33) der hydrodynamischen Kupplung (1) sich verjüngend ausgeführt ist.

14. Hydrodynamische Kupplung nach einem der Ansprüche 1 bis 12, **dadurch gekennzeichnet, daß** der Querschnitt des Verbindungskanales (31 a) kreisförmig ausgeführt ist.

15. Hydrodynamische Kupplung nach einem der Ansprüche 1 bis 12, **dadurch gekennzeichnet, daß** der Querschnitt des Verbindungskanales (31b) oval ausgeführt ist.

## Claims

1. Hydrodynamic coupling (1);
1.1 comprising a pump impeller (3) and a turbine impeller (4), which together form at least one toroidal operating chamber (5) which can be filled with operating medium;
1.2 comprising a housing (26) partially surrounding the pump impeller (3) at least in the axial direction;
1.3 the housing (26) forms, with the pump impeller (3), at least one intermediate chamber (27);
**characterised by** the following features:
1.4 comprising at least one connecting channel (31) provided in the pump impeller (3) between the toroidal operating chamber (5) and the intermediate chamber (27);
1.5 the connecting channel (31) is aligned between the pump impeller (3) and the turbine impeller (4) to produce a bypass flow for rinsing the intermediate chamber in the direction of flow in the operating state of the hydrodynamic coupling (1) between the pump impeller and the turbine impeller (3, 4), tangentially to the circuit contour of the flow circuit occurring in the operating state.

2. Hydrodynamic coupling according to claim 1, **characterised in that** the housing (26) rotates in the operating state of the coupling (1).

3. Hydrodynamic coupling according to claim 2, **characterised in that** the housing (26) is coupled at least indirectly to the pump wheel (3).

4. Hydrodynamic coupling according to claim 2, **characterised in that** the housing (26) is at least indirectly coupled to the turbine impeller (4).

5. Hydrodynamic coupling according to any of claims 1 to 4, **characterised in that** the connecting channel between toroidal operating chamber (5) and intermediate chamber (27) is aligned tangentially in the direction toward the circuit contour of the flow circuit occurring between pump impeller (3) and turbine impeller (4) in the operating state.

6. Hydrodynamic coupling according to any of claims 1 to 5, **characterised in that** the connecting channel (31) has a straight course free of changes in direction.

7. Hydrodynamic coupling according to any of claims 1 to 6, **characterised in that** a plurality of connecting channels (31) is provided.

8. Hydrodynamic coupling according to claim 7, **characterised in that** the connecting channels (31) are arranged on a theoretically conceived peripheral line (UL) of the pump impeller (3) which extends parallel to a centre plane formed between the pump impeller (3) and the turbine impeller (4) in the fitted state.

9. Hydrodynamic coupling according to claim 7, **characterised in that** the connecting channels (31) are arranged on a plurality of theoretically conceived peripheral lines of the pump impeller (3), which lines extend parallel to the centre plane between the pump impeller (3) and the turbine impeller (4) in the fitted state.

10. Hydrodynamic coupling according to any of claims 7 to 9, **characterised in that** the spacing between two adjacent connecting channels (31) is constant.

11. Hydrodynamic coupling according to any of claims 1 to 10, **characterised in that** the cross-section of the connecting channel (31) is designed so as to be constant over its extension from the inner periphery (32) of the pump wheel (3) to the outer periphery (33).

12. Hydrodynamic coupling according to any of claims 1 to 10, **characterised in that** the connecting channel (31) comprises at least one change in cross-section over its extension from the inner periphery (32) of the pump wheel (3) to the outer periphery (33).

13. Hydrodynamic coupling according to claim 12, **characterised in that** the connecting channel (31) is designed so as to taper in the direction of the outer periphery (33) of the hydrodynamic coupling (1).

14. Hydrodynamic coupling according to any of claims 1 to 12, **characterised in that** the cross-section of the connecting channel (31a) is circular.

15. Hydrodynamic coupling according to any of claims 1 to 12, **characterised in that** the cross-section of the connecting channel (31b) is oval in design.

## Revendications

1. Accouplement hydrodynamique (1) ;
1.1 avec une roue à aubes de pompe (3) et une roue à aubes de turbine (4), qui forment ensemble au moins un espace de travail (5) torique pouvant être rempli avec du fluide de fonctionnement ;
1.2 avec un carter (26) entourant la roue à aubes de pompe (3) au moins partiellement en direction axiale;
1.3 le carter (26) forme avec la roue à aubes de pompe (3) au moins un espace intermédiaire (27) ;
**caractérisé par** les dispositions suivantes :
1.4 au moins un canal de raccordement (31) prévu dans la roue à aubes de pompe (3) entre l'espace de travail torique (5) et l'espace intermédiaire (27) ;
1.5 le canal de raccordement (31) est aligné pour réaliser un courant secondaire destiné à balayer l'espace intermédiaire dans le sens de l'écoulement à l'état de fonctionnement de l'accouplement hydrodynamique (1) entre la roue à aubes de pompe et la roue à aubes de turbine (3,4) tangentiellement au contour de circulation qui s'établit à l'état de fonctionnement entre la roue à aubes de pompe (3) et la roue à aubes de turbine (4).

2. Accouplement hydrodynamique selon la revendication 1, **caractérisé en ce que** le carter (26) tourne à l'état de fonctionnement de l'accouplement (1).

3. Accouplement hydrodynamique selon la revendication 2, **caractérisé en ce que** le carter (26) est couplé au moins indirectement à la roue de pompe (3).

4. Accouplement hydrodynamique selon la revendication 2, **caractérisé en ce que** le carter (26) est couplé au moins indirectement avec la roue à aubes de turbine (4).

5. Accouplement hydrodynamique selon l'une des revendications 1 à 4, **caractérisé en ce que** le canal de raccordement entre espace de travail torique (5) et espace intermédiaire (27) est dirigé tangentiellement au contour de circulation qui s'établit entre roue à aubes de pompe (3) et roue à aubes de turbine (4) à l'état de fonctionnement.

6. Accouplement hydrodynamique selon l'une des revendications 1 à 5, **caractérisé en ce que** le canal de raccordement (31) présente un cours rectiligne dépourvu de changements de direction.

7. Accouplement hydrodynamique selon l'une des revendications 1 à 6, **caractérisé en ce qu'**il est prévu une pluralité de canaux de raccordement (31).

8. Accouplement hydrodynamique selon la revendication 7, **caractérisé en ce que** les canaux de raccordement (31) sont agencés sur une ligne périphérique (UL) imaginaire théorique de la roue à aubes de pompe (3) qui est parallèle à un plan médian formé entre la roue à aubes de pompe (3) et la roue à aubes de turbine (4) à l'état monté.

9. Accouplement hydrodynamique selon la revendication 7, **caractérisé en ce que** les canaux de raccordement (31) sont agencés sur plusieurs lignes périphériques théoriques de la roue à aubes de pompe (3), qui sont parallèles au plan médian entre la roue à aubes de pompe (3) et la roue à aubes de turbine (4) à l'état monté.

10. Accouplement hydrodynamique selon l'une des revendications 7 à 9, **caractérisé en ce que** l'écart entre deux canaux de raccordement (31) contigus est constant.

11. Accouplement hydrodynamique selon l'une des revendications 1 à 10, **caractérisé en ce que** la section du canal de raccordement (31) est réalisée de manière constante sur son étendue allant de la périphérie intérieure (32) de la roue de pompe (3) à la périphérie extérieure (33).

12. Accouplement hydrodynamique selon l'une des revendications 1 à 10, **caractérisé en ce que** le canal de raccordement (31) présente au moins une modification de section sur son étendue allant de la périphérie intérieure (32) de la roue de pompe (3) à la périphérie extérieure (33).

13. Accouplement hydrodynamique selon la revendication 12, **caractérisé en ce que** le canal de raccordement (31) va en s'amincissant dans le sens de la périphérie extérieure (33) de l'accouplement hydrodynamique (1).

14. Accouplement hydrodynamique selon l'une des revendications 1 à 12, **caractérisé en ce que** la section du canal de raccordement (31a) est de forme circulaire.

15. Accouplement hydrodynamique selon l'une des revendications 1 à 12, **caractérisé en ce que** la section du canal de raccordement (31b) est de forme ovale.
